# EUROPÄISCHE PATENTSCHRIFT

(11) **EP 0 911 232 B1**
(45) Veröffentlichungstag und Bekanntmachung des Hinweises auf die Patenterteilung: **17.12.2003**
(21) Anmeldenummer: 98119259.4
(22) Anmeldetag: 13.10.1998
(51) Int. Cl.: B60S 1/52, B05B 1/10, B05B 1/14

(54) **Reinigungsvorrichtung für eine Scheibe eines Kraftfahrzeuges**
Cleaning device for a pane of a vehicle
Dispositif de nettoyage pour une vitre d'un véhicule

(30) Priorität: 20.10.1997 DE 19746275
(43) Veröffentlichungstag der Anmeldung: 28.04.1999
(73) Patentinhaber: Siemens Aktiengesellschaft, 80333 München (DE)
(72) Erfinder: Hahn, Torsten, 34576 Homberg (DE); Neumann, Willi, 36179 Bebra (DE)

(56) Entgegenhaltungen:
- EP-A- 0 733 527
- DE-A- 3 822 845
- DE-A- 4 303 113
- FR-A- 2 752 755
- US-A- 2 622 929
- US-A- 3 008 170

## Beschreibung

Die Erfindung betrifft eine Reinigungsvorrichtung für eine Scheibe eines Kraftfahrzeuges mit zumindest zwei Waschflüssigkeit auf die Scheibe sprühenden Waschdüsen, wobei die Sprühbereiche der Waschdüsen einander ergänzen.

Eine solche Reinigungsvorrichtung ist beispielsweise aus der US-A-2,622,929 bekannt. Diese Reinigungsvorrichtung hat einen Grundkörper mit darin angeordneten, Waschflüssigkeit führenden Kanälen. In zwei Kanälen sind Waschdüsen angeordnet, welche sich jeweils auf vorgesehene Sprühbereiche ausrichten lassen.

Nachteilig bei der bekannten Reinigungsvorrichtung ist, dass der Sprühbereich der Waschdüse schwierig an die Form der Scheibe anzupassen ist. Beispielsweise führen Reibungsverluste innerhalb der Waschdüse häufig zu einer Einengung des Sprühbereichs und damit zu einer unzureichenden Reinigung der Scheibe in ihren Eckbereichen. Weiterhin muss die Waschdüse bei der Montage aufwendig gegenüber der Scheibe ausgerichtet werden. Dies führt zu einer sehr kostenintensiven, manuellen Montage der Reinigungsvorrichtung.

Der Erfindung liegt das Problem zugrunde, eine Reinigungsvorrichtung der eingangs genannten Art so zu gestalten, dass sie einen möglichst großen Bereich der Scheibe mit Waschflüssigkeit benetzt und kostengünstig zu montieren ist.

Dieses Problem wird erfindungsgemäß dadurch gelöst, dass ein gemeinsames, die Waschdüsen aufweisendes Bauteil in einem Schacht eines Düsenstocks montiert ist und dass Wandungen des das gemeinsame Bauteil halternden Schachtes Begrenzungen eines Flüssigkeitsraums der Waschdüsen bilden.

Durch diese Gestaltung lassen sich die Waschdüsen des gemeinsamen Bauteils wie einzelne Waschdüsen unabhängig voneinander auf vorgesehene Sprühbereiche und Sprühdrücke auslegen, so dass auch asymmetrische Scheiben durch eine Addition der Sprühflächen entsprechend gestalteter Waschdüsen vollständig gereinigt werden. Hierbei lässt sich zudem einfach vermeiden, dass Waschflüssigkeit neben die Scheibe gelangt. Im Vergleich zu der bekannten Reinigungsvorrichtung führen Reibungsverluste innerhalb der Waschdüsen der erfindungsgemäßen Reinigungsvorrichtung nur zu einem geringfügig veränderten Sprühbereich auf der Scheibe. Dank der Erfindung ist selbst bei einer Vielzahl von Waschdüsen in dem gemeinsamen Bauteil ein besonders geringer baulicher Aufwand erforderlich. Die erfindungsgemäße Reinigungsvorrichtung eignet sich daher auch für Front- und Heckscheiben von Kraftfahrzeugen oder für Scheiben, bei denen nach einem Aufsprühen der Waschflüssigkeit mit einem Wischer nachgewischt wird. Bei als Fluidic-Düsen ausgebildeten Waschdüsen hat die erfindungsgemäße Reinigungsvorrichtung zudem einen sehr einfachen Aufbau, da Fluidic-Düsen zur Erzeugung des hin- und herschwingenden Waschflüssigkeitsstrahls meist einen großen Flüssigkeitsraum mit blockförmigen Einbauten aufweisen. Ein zwei Waschdüsen aufweisendes Bauteil lässt sich hierdurch beispielsweise in einer axial entformbaren Spritzguss- oder Sinterform herstellen.

Mit der erfindungsgemäßen Reinigungsvorrichtung lässt sich eine großflächige Scheibe ohne nachzuwischen reinigen, wenn das gemeinsame Bauteil in einem mittleren Bereich eine Trennwand aufweist und auf beiden Seiten der Trennwand jeweils eine als Fluidic-Chip ausgebildete Waschdüse angeordnet ist. Als Fluidic-Chip ausgebildete Waschdüsen erzeugen einen zyklisch hin- und herschwingenden Waschflüssigkeitsstrahl mit einem besonders geringen Querschnitt. Durch das Hin- und Herschwingen des Waschflüssigkeitsstrahls lässt sich beispielsweise ein streifenförmiger Bereich der Scheibe mit Waschflüssigkeit benetzen. Der Waschflüssigkeitsstrahl hat dabei einen sehr hohen Druck, so dass auf der Scheibe anhaftender Schmutz weggespült wird. Diese Waschdüsen haben ovale oder streifenförmige Sprühbereiche, die einfach zu einem großen Sprühbereich addiert werden können.

Die Versorgung der Waschdüsen mit Waschflüssigkeit gestaltet sich konstruktiv besonders einfach, wenn die Trennwand eine Ausnehmung zum Überströmen von Waschflüssigkeit von der einen Waschdüse zu der anderen Waschdüse hat.

Das die Waschdüsen aufweisende Bauteil lässt sich gemäß einer anderen vorteilhaften Weiterbildung der Erfindung besonders einfach montieren, wenn das gemeinsame Bauteil der Waschdüsen und der Schacht jeweils keilförmig gestaltet sind. Durch diese Gestaltung sind die Waschdüsen bei der Montage in dem Schacht automatisch ausgerichtet.

Die Montage des die Waschdüsen aufweisenden Bauteils erfordert gemäß einer anderen vorteilhaften Weiterbildung der Erfindung einen besonders geringen Zeitaufwand, wenn das gemeinsame Bauteil im Bereich der Trennwand abstehende Zapfen und ein das Bauteil halternder Düsenstock die Zapfen umgreifende Rastelemente aufweist. Die Montage lässt sich zudem automatisieren.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: vor einer Scheibe angeordnete Waschdüsen mit Waschflüssigkeitsstrahlen,
- Fig.2: die Waschdüsen aus Figur 1 in einem Längsschnitt,
- Fig.3: eine Ansicht auf die Waschdüsen aus Figur 1 von der Scheibe aus.

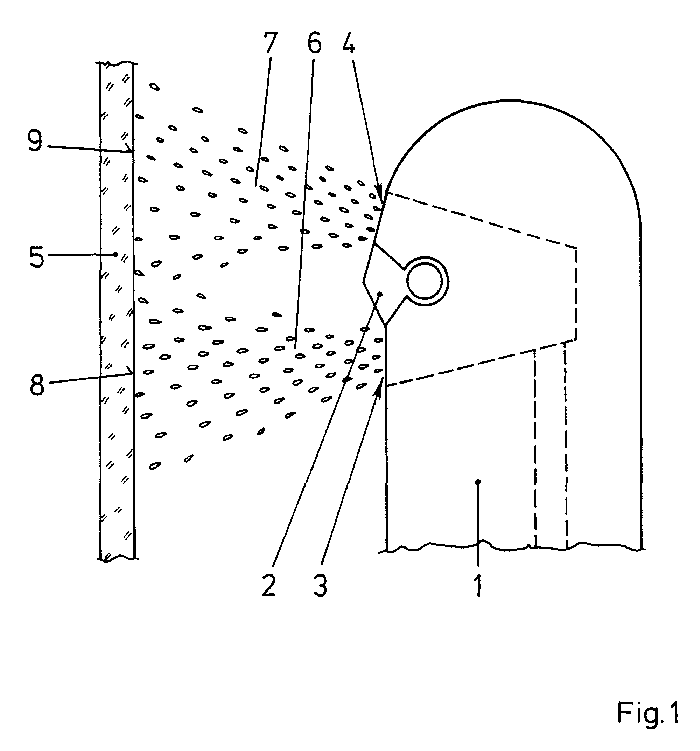

Die Figur 1 zeigt ein in einem Düsenstock 1 befestigtes Bauteil 2 mit zwei Waschdüsen 3, 4. Der Düsenstock 1 ist mit den Waschdüsen 3, 4 auf eine Scheibe 5 gerichtet. Bei der Scheibe 5 kann es sich beispielsweise um eine Streuscheibe einer Kraftfahrzeugleuchte oder um eine Frontoder Heckscheibe eines Kraftfahrzeuges handeln. Die Waschdüsen 3, 4 sind als Fluidic-Düsen ausgebildet und erzeugen jeweils einen senkrecht zur Zeichenebene zyklisch hin- und herschwingenden Waschflüssigkeitsstrahl 6, 7 mit einem besonders geringen Querschnitt. Mit den Waschdüsen 3, 4 werden damit jeweils streifenförmige Sprühbereiche 8, 9 auf der Scheibe 5 erzeugt, die sich zu einem großen Sprühbereich ergänzen. Zwischen den Waschflüssigkeitsstrahlen 6, 7 entsteht dabei ein Unterdruck, der dazu führt, dass die Flugbahn einzelner Waschflüssigkeitstropfen zu dem jeweils anderen Waschflüssigkeitsstrahl 8, 9 hin gebogen ist. Hierdurch wird der zwischen den Sprühbereichen 8, 9 liegende Bereich der Scheibe 5 ebenfalls mit Waschflüssigkeit benetzt.

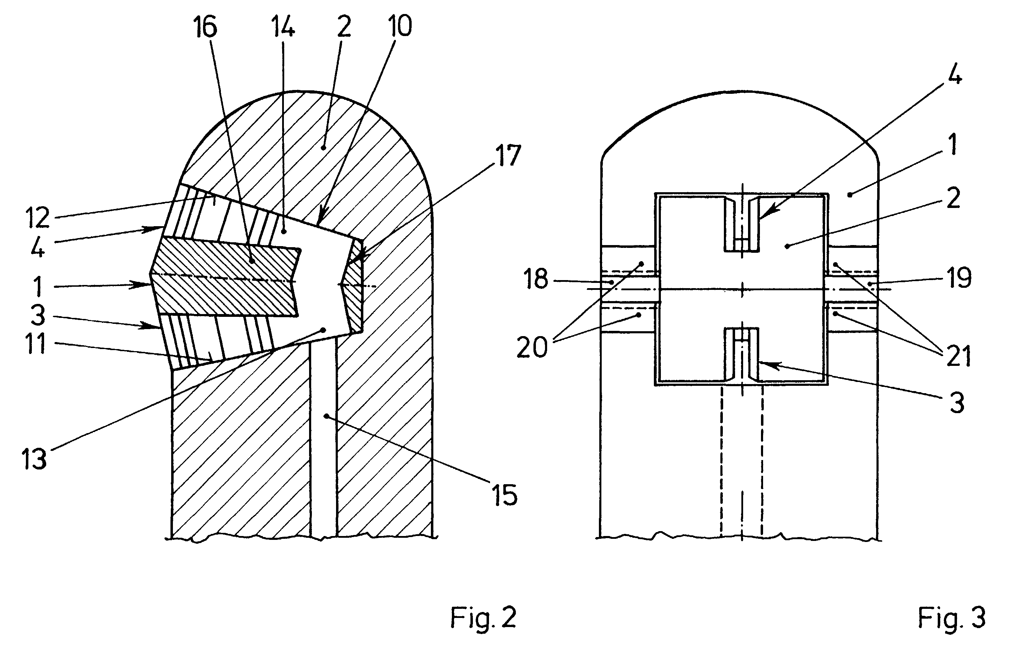

Die Figur 2 zeigt in einem Längsschnitt durch den Düsenstock 1 und das gemeinsame Bauteil 2 der Waschdüsen 3, 4, dass das Bauteil 2 keilförmig gestaltet und in einem ebenfalls keilförmigen Schacht 10 des Düsenstocks 1 angeordnet ist. Wandungen 11, 12 des Schachtes 10 begrenzen hierbei jeweils einen Flüssigkeitsraum 13, 14 der Waschdüsen 3, 4. Die Waschdüsen 3, 4 werden über einen im Düsenstock 1 angeordneten Waschflüssigkeitskanal 15 mit waschflüssigkeit versorgt. Zwischen den Waschdüsen 3, 4 ist eine Trennwand 16 mit einer Ausnehmung 17 angeordnet, über die Waschflüssigkeit von der unteren Waschdüse 3 zu der oberen Waschdüse 4 überströmen kann. Der obere und der untere Bereich der Ausnehmung 17 sind jeweils senkrecht zu den an dem Schacht 10 anliegenden Bereichen der Waschdüsen 3, 4 angeordnet. Hierdurch lässt sich das gemeinsame Bauteil 2 der Waschdüsen 3, 4 beispielsweise in einer axial entformbaren Spritzguss- oder Sinterform fertigen.

In Figur 3 ist der Düsenstock 1 und das gemeinsame Bauteil 2 der Waschdüsen 3, 4 aus Figur 1 in einer Ansicht von der Scheibe 5 aus dargestellt. Hierbei ist zu erkennen, dass das gemeinsame Bauteil 2 der Waschdüsen 3, 4 seitlich abstehende Zapfen 18, 19 hat, die von Rastelementen 20, 21 des Düsenstocks 1 umgriffen werden.

## Patentansprüche

1. Reinigungsvorrichtung für eine Scheibe (5) eines Kraftfahrzeuges mit zumindest zwei Waschflüssigkeit auf die Scheibe (5) sprühenden Waschdüsen (3, 4), wobei die Sprühbereiche der Waschdüsen (3, 4) einander ergänzen, **dadurch gekennzeichnet, dass** ein gemeinsames, die Waschdüsen (3, 4) aufweisendes Bauteil (2) in einem Schacht (10) eines Düsenstocks (1) montiert ist und dass Wandungen des das gemeinsame Bauteil (2) halternden Schachtes (10) Begrenzungen eines Flüssigkeitsraums (13, 14) der Waschdüsen (3, 4) bilden.

2. Reinigungsvorrichtung nach Anspruch 1, **dadurch gekennzeichnet , dass** das gemeinsame Bauteil (2) in einem mittleren Bereich eine Trennwand (16) aufweist und auf beiden Seiten der Trennwand (16) jeweils eine als Fluidic-Chip ausgebildete Waschdüse (3, 4) angeordnet ist.

3. Reinigungsvorrichtung nach Anspruch 1 oder 2, **dadurch gekennzeichnet, dass** die Trennwand (16) eine Ausnehmung (17) zum Überströmen von Waschflüssigkeit von der einen Waschdüse (3) zu der anderen Waschdüse (4) hat.

4. Reinigungsvorrichtung nach zumindest einem der vorhergehenden Ansprüche , **dadurch gekennzeichnet , dass** das gemeinsame Bauteil (2) der Waschdüsen (3, 4) und der Schacht (10) jeweils keilförmig gestaltet sind.

5. Reinigungsvorrichtung nach zumindest einem der vorhergehenden Ansprüche, **dadurch gekennzeichnet, dass** das gemeinsame Bauteil (2) im Bereich der Trennwand (16) abstehende Zapfen (18, 19) und ein das Bauteil (2) halternder Düsenstock (1) die Zapfen (18, 19) umgreifende Rastelemente (20, 21) aufweist.

## Claims

1. Cleaning device for a pane (5) of a motor vehicle, having at least two washer nozzles (3, 4) which spray washing liquid onto the pane (5), the spray regions of the washer nozzles (3, 4) complementing one another, **characterized in that** a common component (2) which has the washer nozzles (3, 4) is fitted in a shaft (10) of a nozzle stem (1) , and **in that** walls of the shaft (10) which holds the common component (2) form boundaries of a liquid space (13, 14) of the washer nozzles (3, 4).

2. Cleaning device according to Claim 1, **characterized in that** the common component (2) has a partition (16) in a central region and a respective washer nozzle (3, 4) designed as a fluidic chip is arranged on each side of the partition (16).

3. Cleaning device according to Claim 1 or 2, **characterized in that** the partition (16) has a recess (17) for the overflow of washing liquid from the one washer nozzle (3) to the other washer nozzle (4).

4. Cleaning device according to at least one of the preceding claims, **characterized in that** the common component (2) of the washer nozzles (3, 4) and of the shaft (10) are in each case of wedge-shaped design.

5. Cleaning device according to at least one of the preceding claims, **characterized in that** the common component (2) has pins (18, 19) protruding in the region of the partition (16), and a nozzle stem (1) which holds the component (2) has latching elements (20, 21) which engage around the pins (18, 19).

## Revendications

1. Système de nettoyage pour une vitre (5) d'un véhicule automobile, ayant au moins deux gicleurs de lavage (3, 4) qui pulvérisent du liquide de nettoyage sur la vitre (5), les zones de pulvérisation des gicleurs de lavage (3, 4) se complétant réciproquement, **caractérisé par le fait qu'**une pièce commune (2), comportant les gicleurs (3, 4), est montée dans un puits (10) d'un tronc à gicleurs (1) et que des parois du puits (10) maintenant la pièce commune (2) forment des limites d'un espace de liquide (13, 14) des gicleurs de lavage (3, 4).

2. Système de nettoyage selon la revendication 1 **caractérisé par le fait que** la pièce commune (2) comporte, dans une zone centrale, une paroi de séparation (16) et qu'un gicleur de lavage (3, 4), conçu comme gicleur fluidic, est disposé de chacun des deux côtés de la paroi de séparation (16).

3. Système de nettoyage selon la revendication 1 ou 2 **caractérisé par le fait que** la paroi de séparation (16) a un évidement (17) pour le débordement de liquide de lavage venant de l'un des gicleurs de lavage (3) vers l'autre gicleur de lavage (4).

4. Système de nettoyage selon au moins l'une des revendications précédentes **caractérisé par le fait que** la pièce commune (2) des gicleurs de lavage (3, 4) et le puits (10) sont l'un et l'autre cunéiformes.

5. Système de nettoyage selon au moins l'une des revendications précédentes **caractérisé par le fait que** la pièce commune (2) a, dans la zone de la paroi de séparation (16), des tourillons (18, 19) qui dépassent et qu'un tronc à gicleurs (1), qui maintient la pièce commune (2), a des éléments d'encliquetage (20, 21) qui embrassent les tourillons (18, 19).
